# EUROPEAN PATENT APPLICATION

(11) **EP 2 330 721 A1**
(43) Date of publication of application: **08.06.2011**
(21) Application number: 10193179.8
(22) Date of filing: 30.11.2010
(51) Int. Cl.: H02K 15/02, B21D 28/22, B21D 43/22

(54) **Production line for manufacturing laminations and lamination packs for rotors and stators**

(30) Priority: 01.12.2009 IT VI20090290
(71) Applicant: Lora, Giuseppe, 36100 Vicenza (IT)
(72) Inventor: Lora, Giuseppe, 36100 Vicenza (IT)
(74) Representative: Bettello, Pietro

(57) **Abstract**

The finding refers to a production line of laminations of rotor/stator packs, of the type consisting of a plurality of laminations, obtained through punching strips or plates, preferably having considerable dimensions, arranged on top of one another and rotated to compensate.

Such a production line has a plurality of work cells that are suitable for carrying out this manufacture in an automated manner, at a single work station, so as to obtain a much more cost-effective production of laminations with respect to what can be obtained with known types of production methods. (Fig. 1)

## Description

The present finding concerns an automated production line of laminations and rotor/stator packs, according to the general part of claim 1.

So called rotor/stator packs consist of a plurality of laminations arranged on top of one another and rotated to compensate, obtained by punching strips or plates. They are used to make, rotors and stators of electric machines, respectively. The manufacturing of the two types of packs comes down to substantially to two operations: the operation of punching a strip to obtain the single shaped laminations, respectively for the rotor and the stator and the operation of assembling said laminations in piles, so as to form the final pack, also in this case for the rotor and for the stator.

At the current state of the art, the two operations are carried out in two distinct stations, the punching station and the station in which laminations are packed.

Such a way of operating requires, especially when the two operations are carried out in rooms that are considerably distant from one another, in addition to the step of transportation from one working station to the other, also two steps of storing the laminations, the one that follows punching and the one that precedes the packing.

Moreover, again at the state of the art, the packing operation is carried out manually or semi-automatically and, in any case, the success of the operation again depends upon the ability of the workers.

From what has been outlined above, it is easy to see the operative drawbacks of the current methods of manufacturing rotor and stator packs and that, in practice, and in particular when the laminations have considerable diameter dimensions, result in a low productivity of the operation and therefore a high cost of the final product.

The purpose of the present finding is to provide a method for manufacturing laminations, rotors and stators and rotor and stator lamination packs, which does not have the drawbacks displayed by known embodiments.

Specifically, the purpose of the finding is to provide a production line for rotor packs and stator packs of laminations, which leads to a production method that is more cost-effective with respect to those known.

Such a purpose is achieved with a production line for laminations and for rotor/stator packs the operation of which is completely automated and in which worker intervention is limited to setting up the die and setting the initial operation parameters of the machine.

Constructively, the plant according to the finding is a single-body unit on which the following work cells are arranged:
- punching of a strip or plate for supplying material so as to obtain a semi-finished punched product consisting of the two laminations, the rotor and stator, which are joined together through micro-joints;
- micro-punching the micro-joints so as to detach from one another the two laminations,
- extracting and moving away the rotor lamination from the stator lamination and transportation of the two laminations to the storage unit for forming packs;
- arrangement with rotation for compensation of the two laminations and subsequent depositing of the aforementioned on the corresponding associated pallets;
- inserting the laminations on corresponding stackers consisting of columns of the so called "expander" type, for forming the rotor and stator packs in the area of the storage unit. Subsequently, the packs are taken, through robot carts and transported from the storage unit to the welding or seaming cells, situated outside the plant according to the finding.

The plant finishes off with a station in which a semi-finished piece to undergo quality control is automatically taken from the micro-punching cell, with a frequency set by the worker and without interrupting the productive cycle. Further characteristics and advantages of use of the plant according to the finding shall become clearer from the description of one of its particular embodiments, given purely as a non limiting example, through the attached drawing tables, in which:

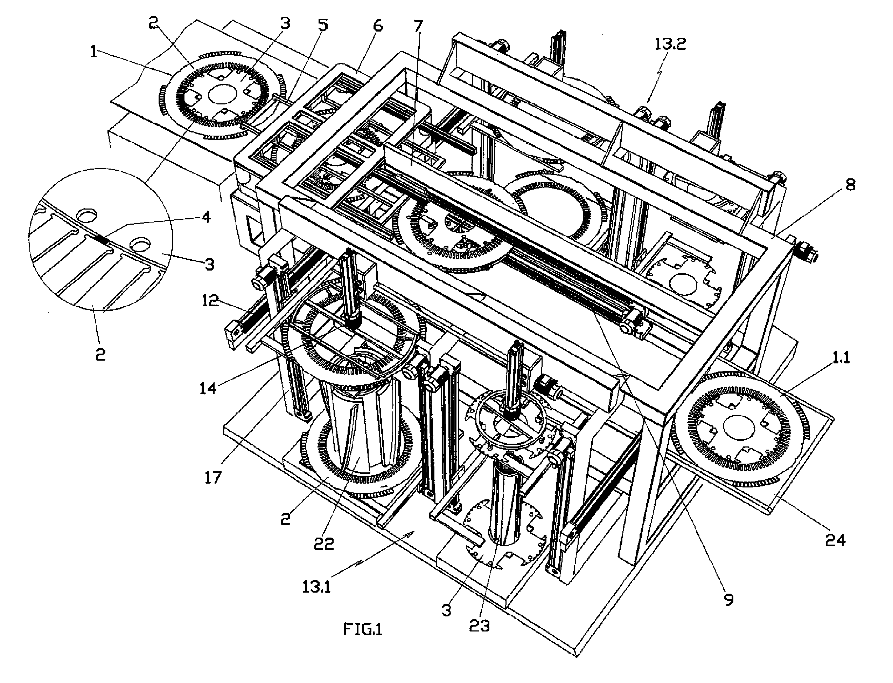

- fig. 1 (tab. I) represents a perspective view of the plant according to the finding;

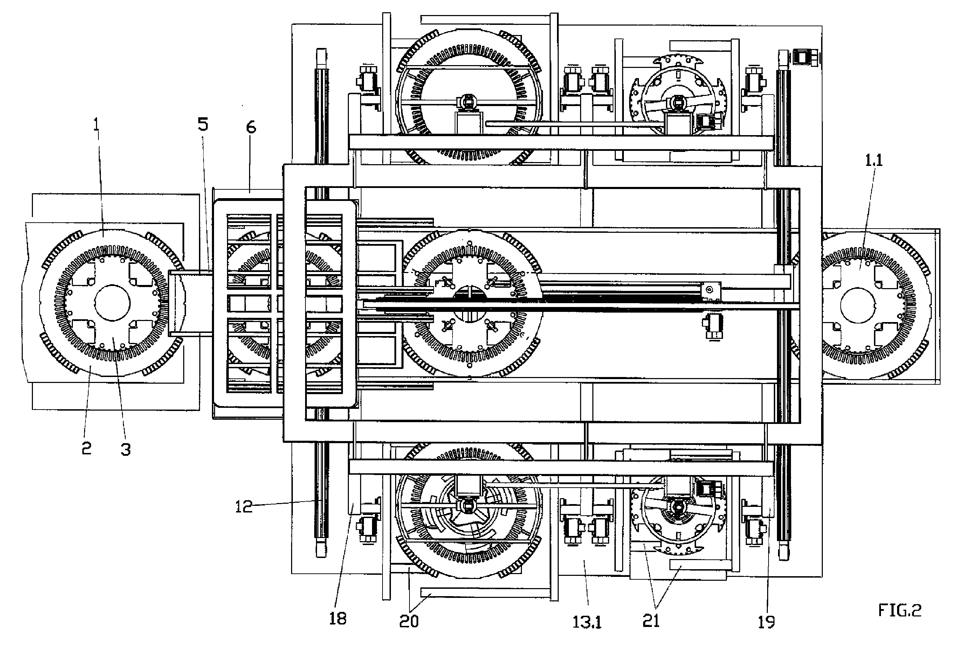

- fig. 2 (tab. II) represents a plan view of the plant according to the finding;

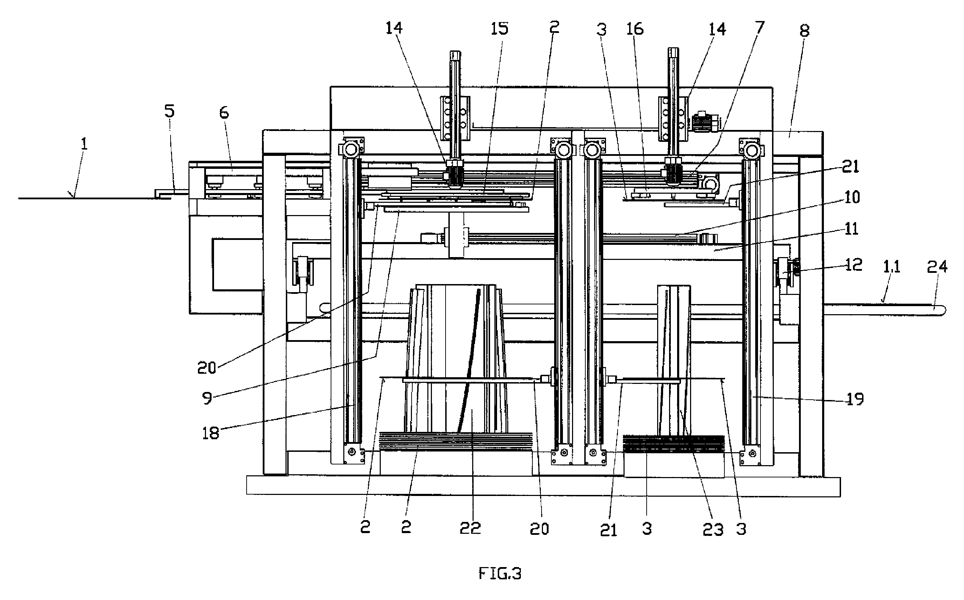

- fig. 3 (tab. III) represents a front view of the plant according to the finding;

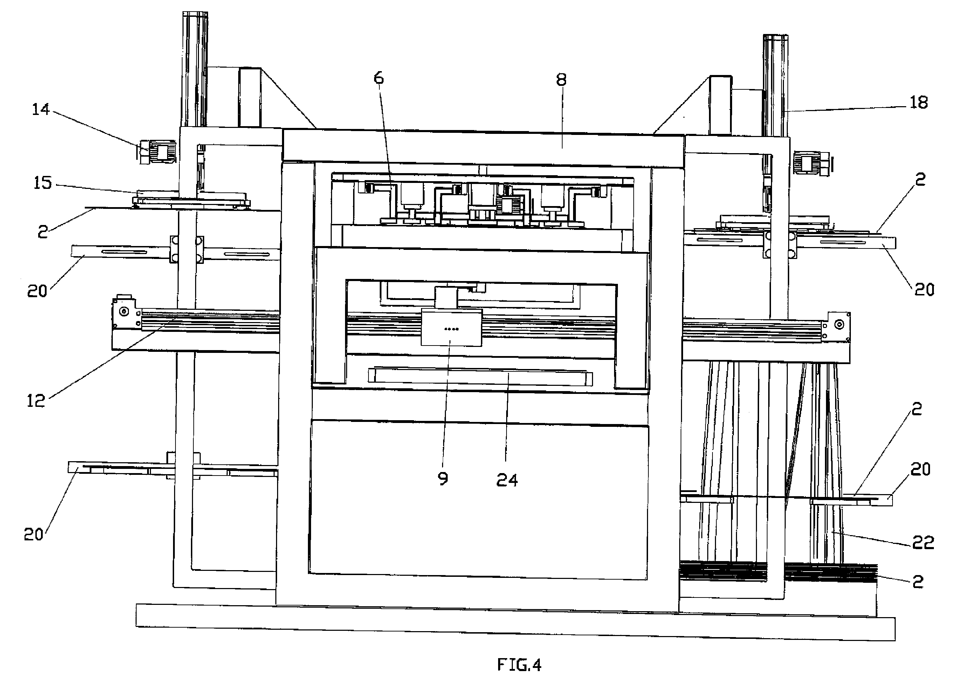

- fig. 4 (tab. IV) represents a side view of the plant according to the finding, from the side in which the lamination enters;

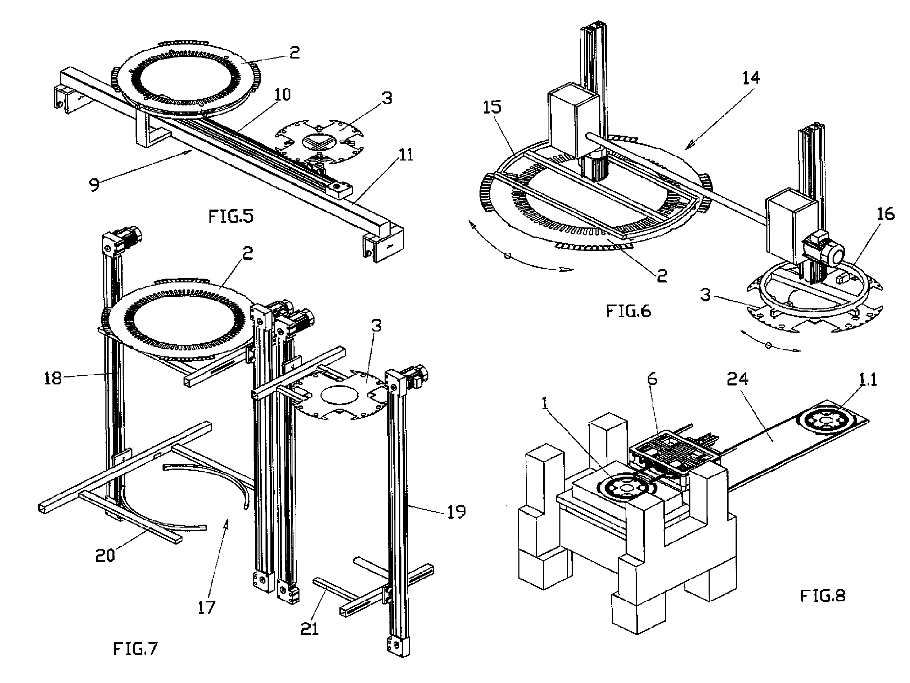

- figs. 5-8 (tab. V) represent detail views of the mechanical hands that operate in the plant according to the finding.

As visible in the overall figures, the plant according to the finding substantially comprises two working groups: the group for punching the laminations and the group for forming the rotor and stator packs.

The punching group produces the punched semi-finished product, indicated with reference numeral 1, consisting of the stator lamination 2 and of the rotor lamination 3, arranged inside, held together through micro-joints 4. Operatively, the group for forming the packs comprises a mechanical hand 5. which takes the semi-finished product I from the die matrix and arranges it, first at a micro-punching unit 6 in which the punching of the micro-joints is carried out to separate the two laminations,

Subsequently, said mechanical hand, sliding along the bar 7, arranges the two laminations 2 and 3 inside the load-bearing structure 8, at the withdrawal area, through a second mechanical hand, indicated with reference numeral 9, which takes care of taking out and moving away the rotor laminations 3 from the stator lamination 2.

As visible in the detail figures, the mechanical hand 9 is made up of a structure having two shafts 10 and 11, where the shaft 10 moves the lamination 3, whereas the shaft 11, sliding along the guide 12, arranges the two laminations at one of the storage units for forming the packs, wholly indicated with reference numerals 13.1 and 13.2. arranged on the two outer sides of the structure 8. Subsequently the two laminations 2 and 3 are taken by a third mechanical hand, wholly indicated with reference numeral 14, equipped with rotating hooks 15 and 16 which, after having taken the two laminations 2 and 3 from the preceding mechanical hand 9, give them with an angular rotation so as to obtain the compensation arrangement and then deposit them on a fourth mechanical hand, wholly indicated with reference numeral 17, which has the function of inserting the laminations 2 and 3 into the corresponding stackers so as to form the rotor and stator packs.

As visible in the detail figures, the mechanical hand 17 comprises two pairs of uprights 18 and 19, on which the associated pallets 20 and 21 vertically slide, taking the oriented laminations 2 and 3 from the hooks 15 and 16 and depositing them on the corresponding piles, which are gradually formed on the stackers 22 and 23.

Finally, in the forming group a conveyor belt 24 is inserted, extending below the micro-punching unit 6 so as to allow the deposit, with cycles set by the worker, of a punched semi-finished product 1.1 and transport it outside the structure, where it is taken for quality control.

The finding thus conceived can undergo modifications and variants and the details can be replaced by technically equivalent elements, all covered by the following claims.

## Claims

1. PRODUCTION LINE FOR LAMINATIONS AND ROTOR/STATOR PACKS, of the type consisting of a plurality of laminations, obtained through punching of strips or plates, having different dimensions, arranged on top of one another and rotated to compensate, said production line being **characterised in that** it comprises a single-body unit on which the following work cells are arranged:
- punching cell of a strip or plate for supplying material so as to obtain a semi-finished punched product (1) consisting of the two laminations, that of the stator (2) and that of the rotor (3), which are joined together through micro-joints;
- inicro-punching cell of the micro-joints so as to detach the two laminations from one another,
- cell for extracting and moving away the rotor lamination (3) from the stator lamination (2) and for transporting the two laminations to the storage unit (13) for forming packs;
- positioning cell with rotation to compensate and deposit the two laminations on the corresponding associated pallet;
- cell for inserting the laminations on corresponding stackers (22, 23), consisting of columns of the so called "expander" type, for forming the rotor and stator packs in the area of the storage unit.

2. PRODUCTION LINE, according to claim 1, **characterised in that** the punching group produces the punched semi-finished product (1), consisting of the stator lamination (2) and of the rotor lamination (3), arranged inside, held together through micro-Joints (4).

3. PRODUCTION LINE, according to claim 2, **characterised in that** the group for forming the packs comprises a mechanical hand (5) that takes the semi-finished product (1) from the matrix of the die and arranges it, first, at a micro-punching unit (6), where the microjoints are punched so as to separate the two laminations and, subsequently, said mechanical hand, sliding on the bar (7), arranges the two laminations (2, 3) inside the load-bearing structure (8), at the area for the withdrawal through a second mechanical hand (9), which takes care of taking out and moving away the rotor lamination (3) from the stator lamination (2).

4. PRODUCTION LINE, according to claim 3, **characterised in that** the second mechanical hand (9) consists of a structure with two shafts (10, 11) in which the shaft (10) moves the lamination (3), whereas the shaft (11). sliding on the guide (12) arranges the two aforementioned laminations at one of the storage units for forming the packs (13.1, 13.2), arranged on the two outer sides of the structure (8).

5. PRODUCTION LINE, according to claim 4, **characterised in that** it comprises a third mechanical hand (14) equipped with rotating hooks (15, 16), which, after having taken the two laminations (2, 3) from the mechanical hand (9), give them an angular rotation, so as to achieve the compensation arrangement and then deposit them on a fourth mechanical hand (17), which has the function of inserting the laminations (2,3) in the corresponding stackers to form the two packs, respectively for the stator and for the rotor.

6. PRODUCTION LINE, according to claim 5, **characterised in that** the mechanical hand (17) comprises two pairs of uprights (18, 19) on which the associated pallets (20, 21), slide vertically, taking the laminations (2, 3), suitably oriented, and deposit them on the corresponding piles, which are gradually formed on the stackers.

7. PRODUCTION LINE, according to one or more of the previous claims, **characterised in that** it comprises a conveyor belt (24), which extends below the micro-punching unit (6) to allow, with cycles pre-set by the worker, a semi-finished punched product (1.1) to be deposited and transported outside of the structure, where it is taken for quality control.

8. PROCESS OF MANUFACTURING LAMINATIONS AND ROTOR/STATOR PACKS, **characterised in that** it uses a production line made according to one or more of the previous claims,
